# EUROPEAN PATENT SPECIFICATION

(11) **EP 1 518 662 B1**
(45) Date of publication and mention of the grant of the patent: **02.07.2008**
(21) Application number: 03380212.5
(22) Date of filing: 25.09.2003
(51) Int. Cl.: B29C 59/00, B60R 21/20

(54) **Method to produce a weakened line in an air bag cover using a sonotrode**
Verfahren zum Einbringen einer Schwächungslinie in eine Airbagabdeckung mittels eines Ultraschallhorns
Procédé pour réaliser une ligne de faible résistance dans un couvercle de coussin gonflable utilisant une sonotrode

(43) Date of publication of application: 30.03.2005
(73) Proprietor: Grupo Antolín Ingeniería, S.A., 09007 Burgos (ES)
(72) Inventor: Gomez Mimbiela, Javier, 09006 Burgos (ES); Le Claire, Bertrand, 09194 Cardenadijo, Burgos (ES)
(74) Representative: Esteban Perez-Serrano, Maria Isabel

(56) References cited:
- EP-A- 1 157 903
- US-A- 3 635 609
- US-A- 3 870 551
- US-A- 5 293 809
- US-A1- 2002 007 544
- US-A1- 2002 024 199

## Description

### OBJECT OF THE INVENTION

The present invention relates to a procedure for obtaining a weakened line for an airbag outlet in a textile lining and to the weakened line thereby obtained, in which the textile lining is the finish of the plastic parts used in vehicle interiors.

This procedure is characterised by the use of sonotrodes to apply mechanical vibrations in the ultrasound range to obtain a weakened line on the textile lining of the plastic part.

The plastic part has a textile lining with a stratified structure in which, in the most complex case, on the substrate are placed a protection barrier layer, a plastic foam and the textile layer on the visible surface. It is possible to include only the textile layer, as well as intermediate solutions including the textile layer with the plastic foam or the textile layer with the barrier layer.

This procedure is also characterised by obtaining a weakened line in a short time, maintaining the design of the textile layer and producing a window that will break correctly along the weakened line when the airbag device is deployed.

### BACKGROUND OF THE INVENTION

Airbags are safety devices consisting of a deployable bag that inflates in a very short time in the event of an impact on the vehicle in order to protect the occupant.

Although the first airbag devices were placed in front of the user to provide protection against frontal collisions, it is currently common to include a greater number of device in side and other positions that protect against an increasingly large number of risk situations.

These new positions require including an airbag device in places allowing less space and requiring specific solutions to define outlet windows for the airbag in surfaces with different finishes.

There are several known solutions for incorporating outlet windows for airbag devices, such as those disclosed in patents DE 19860277 A1 and US 5683101, which make use of a lid that covers all of the airbag outlet window incorporating suitable attachment means that allow it to break off when the airbag is deployed. The lid is the visible element and is part of the vehicle's internal finish.

Also known is the use of textile linings over an airbag outlet window as described in patent WO 02 066298 A1, in which the limits of the window incorporate seams that establish the tearing sense of the fabric.

Another alternative facilitating the window opening when a textile lining is provided is that published in US Patent 2002 0020711. The solution disclosed is based on cutting with a razor or laser the perimeter defining the airbag outlet window, particularly for folding windows.

Also cited is Patent WO 00 61403 A1, which describes a window for airbag devices in which the edges of the lining are folded inwards and a cut is made on the inner end of the fold to conceal said fold while defining an area that is used as an opening to allow the airbag outlet at the time of deployment.

Other techniques rely on defining weakened lines in the plastic piece used as a substrate and stiffening element, which can in turn be coated to improve the appearance of the vehicle interior.

Also known is the ultrasound technique in welding applications or in plastic weakenings, in no case on textiles as in the procedure described in what follows.

The present invention establishes a new procedure that employs a mechanical vibration in the ultrasound range to establish a weakened line in the textile lining defining the outlet window for the airbag.

### DESCRIPTION OF THE INVENTION

The present invention relates to the procedure according to claim 1 for obtaining a weakened line for an airbag outlet in a textile lining and to the weakened line thereby obtained.

The construction of the plastic parts forming part of vehicle interiors lined with textiles dispose the lining on a mould, to then mould the plastic that will constitute the rigid substrate.

To obtain an airbag outlet window a weakening is required of both the lining and the substrate, these weakenings coinciding above each other so that the window perimeter breaks off correctly when receiving the impact of the airbag.

Hereinafter and throughout the description, the term "window" shall be used to mean the opening through which the airbag outlet is achieved. Thus, the opening or window does not have to be defined by a closed line but may instead consist of a U-shaped or an H-shaped line, by way of example. In these cases, the peripheral weakened line of the window shall be understood in a generalised manner as the weakened line defining the outlet window or opening.

The techniques for obtaining an airbag window with a textile lining, as discussed in the background art section, require various operations applied on the substrate and the textile layer with substantial time requirements during the installation, cutting and finishing that can imply high manufacturing costs.

This invention considers the use of one or more sonotrodes to weaken exclusively the visible face of the textile layer.

The lined plastic substrate part presents a stratified structure consisting of the plastic substrate, a barrier layer, a plastic foam layer and lastly the lining established by the textile layer. It is possible for only the textile layer to exist, as well as intermediate situations including the textile layer with the plastic foam layer or the textile layer with the barrier layer. In any case, the textile layer is the only essential layer and in itself constitutes the minimum structure.

The plastic substrate is the stiffening element of the part, which must include a previously defined window that is not the object of this invention. The barrier layer establishes an interface between the foam and the plastic substrate that allows protecting the foam during the moulding operation. The foam allows obtaining a soft and pleasant touch, the finish being completed by the final textile layer. The textile layer has a texture and pattern in accordance with the interior design that must not be harmed by the weakening procedure for defining a window, as this would worsen the quality of the finish.

The procedure for obtaining the window makes use of an ultrasound generation unit consisting of:
- a variable or fixed frequency ultrasound generator
- a converter to transform the generator electrical signal into a vibratory motion
- a modifier for the amplitude of the mechanical vibration
- one or more sonotrodes, which are the means for transmitting the mechanical vibration to the part.

The plastic part with the lining is attached by the face corresponding to the plastic substrate on a supporting cradle. Among the various attachment systems it is possible to cite, by way of example, the use of fastening straps, anchorings or air aspiration.

When the plastic part is attached the sonotrode(s) is brought close to the face with the textile lining. The sonotrode(s) have a configuration of their contact surface matching the weakened line to be obtained, and naturally also matching the shape of the surface for a perfect adaptation.

The weakened line is obtained by the simultaneous application of a force by the sonotrode, giving rise to a distribution of uniform pressures (due to the adaptation of the shape of the sonotrode support surface to the part surface), and the mechanical vibration.

The mechanical vibration transmits mechanical energy that is dissipated as heat along the line of contact, producing a weakening of the lining.

The sonotrode may cover the entire window perimeter when the dimensions are not large. For larger window dimensions, the sonotrode mass will also be greater and the fundamental vibration frequency is reduced. If the mass is too great it may be the case that the vibration frequency is not high enough and will not cause the required weakening, or an excessive application time will be required.

In these cases it is possible to either simultaneously apply various sonotrodes, each of which is applied to a segment of the window, or to use the same sonotrode sequentially on each segment, when the configuration of the contact surface allows.

In this latter case a robotised support will be required to perform the necessary displacements.

The weakened line is produced as a trough or various troughs in the form of a notch, depending on the shape of the sonotrode contact surface, with a predetermined and constant thickness.

The procedure is completed by removing the sonotrode and extracting the part from the support cradle with the corresponding weakened area already established.

The weakened line externally shows the textile layer with the undamaged pattern, thus obtaining a high quality finish from an aesthetic point of view. This finish can present small relief areas configured on the sonotrode contact surface, such as resembling a seam.

The situation of the window will be correct in all cases if the shaped plastic part is suitably inserted in the support cradle, and as the window is the weakened area the textile layer will always tear correctly, complying with specifications when the airbag device is deployed.

The sonotrode time of application is very short, in the order of one second, so that the productivity of the assembly line in the cycle corresponding to the weakening is very high, with the resulting savings in energy, time and therefore manufacturing costs.

It should be remarked that it is not necessary to apply additional parts on the lining or window finish, so that the present invention is a procedure for obtaining an airbag window with a high degree of simplification of the necessary operations.

### DESCRIPTION OF THE DRAWINGS

The present descriptive memory is complemented by a set of drawings illustrating the preferred example.

Figure 1 shows a plastic part of a vehicle interior with an airbag window obtained according to the procedure of the present invention.

Figure 2 is a schematic sequence of the procedure according to the invention for obtaining a window by weakening the lining of a vehicle interior part.

### DETAILED DESCRIPTION OF AN EXAMPLE OF EMBODIMENT

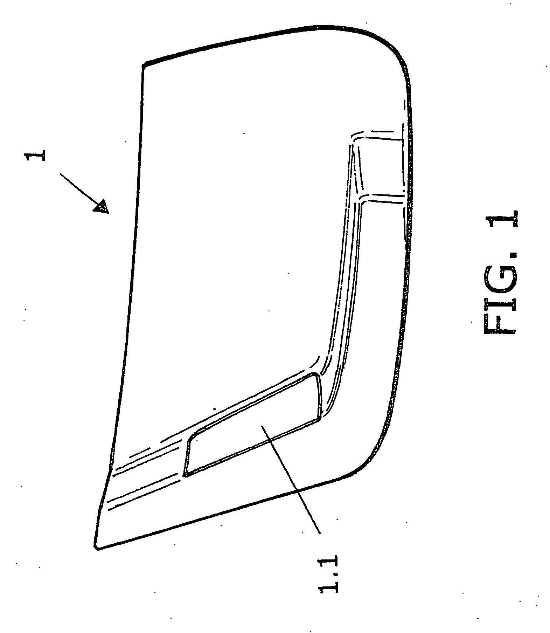

Figure 1 shows an example of a plastic part (1) of a vehicle interior on which will be obtained a weakened line (1.1) defining a window by weakening in the lining (1.5). The reference (1.1) will be used indifferently for the weakened line defining the window and for the window itself.

This window (1.1) is placed in a suitably established location, so that in case of accident the vehicle occupant is protected and the airbag outlet is not hindered.

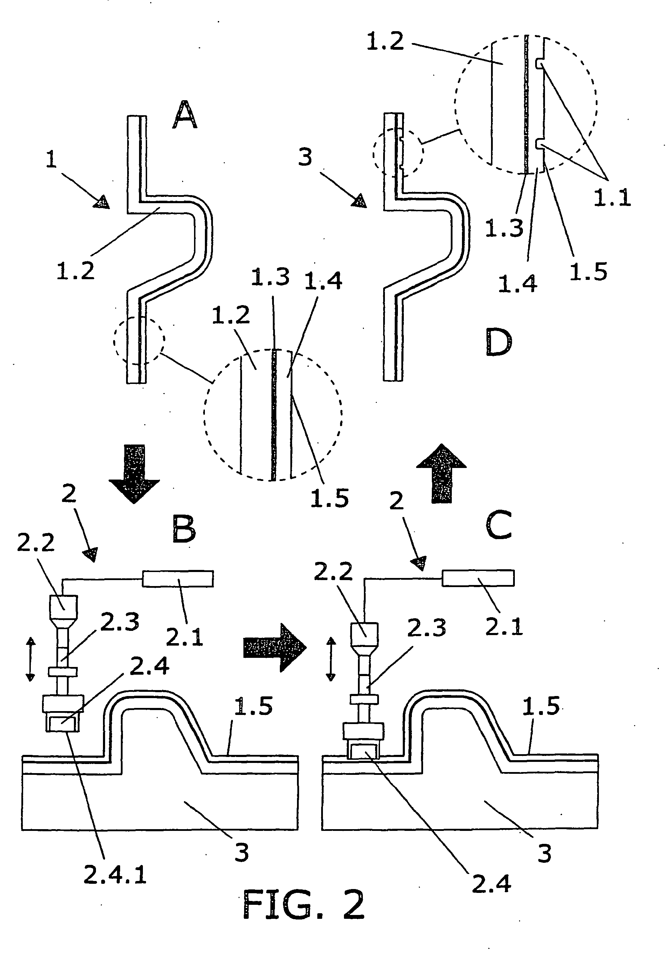

Figure 2 shows schematically four stages (identified by the letters A, B, C and D) of the procedure for obtaining the window (1.1) by means of an ultrasound unit (2). The first stage (A) shows a theoretical cross section of the plastic part (1) with a stratified structure. This structure reveals the plastic substrate (1.2) responsible for the stiffness of the part (1), a barrier layer (1.3) that during moulding of the plastic protects the next layer, comprised by a foam (1.4) and lastly, the textile layer (1.5) responsible for the finish of the visible face of the part (1).

This is the part (1) on which the sonotrode (2.4) of the ultrasound unit (2) is applied.

The second stage (B) shows the ultrasound unit (2) comprising a signal generator (2.1) in a frequency from 20 to 50 kHz that in turn feeds a converter (2.2). This converter (2.2) transforms the electrical signal into a mechanical vibration, suitably transformed by the amplitude modifier (2.3). The mechanical vibration generated is applied on the surface to be weakened by the sonotrode (2.4).

The sonotrode (2.4) is a part whose contact surface (2.4.1) can follow either a closed or open line, depending on whether the window is obtained by a single sonotrode (2.4) or if it is necessary to use several sonotrodes (2.4) simultaneously, or one sonotrode (2.4) applied successively. This same contact surface (2.4.1) may have a relief that will be reproduced in the textile lining (1.5).

Under the ultrasound unit (2) can be seen the cradle (3) on which is placed the plastic substrate (1.2) of the vehicle interior part (1) on which the window (1.1) is to be obtained by weakening the textile lining (1.5).

The third stage (C) shown shows the sonotrode (2.4) near the part (1) applying pressure to overcome a resistance that is mainly due to the foam (1.4). An application time in the order of one second in this embodiment is enough to obtain a suitable window (1.1).

After the sonotrode (2.4) has been removed in the last stage of the procedure (D), the notch or narrowing is shown that causes the weakening on the lining (1.5).

This notch can consist of a relief defined by the contact surface (2.4.1) of the sonotrode (2.4), which can have a relief shape in the form of a seam, a double parallel notch or others.

Also the object of this invention is the window (1.1) obtained by this procedure.

## Claims

1. Procedure for obtaining a weakened line for an airbag outlet in a textile lining, , **characterised in that** it comprises an ultrasound unit (2) consisting of:
- an ultrasound generator (2.1)
- a converter (2.2) that transforms the electrical signal of the generator into a vibratory motion
- an amplitude modifier (2.3) for the mechanical vibration a sonotrode (2.4)
in which in a first stage the part (1) with the textile lining (1.5) is attached to a support cradle (3) to hold it in place, followed by approximating and then applying pressure with the sonotrode (2.4) on the textile lining (1.5), at which time the vibration is produced for a short time, in the order of one second; after applying the sonotrode (2.4) it is removed and the attachment to the cradle (3) is eliminated, releasing the part (1) with the weakened line (1.1) defined in the textile surface (1.5).

2. Procedure for obtaining a weakened line for an airbag outlet in a textile lining, according to claim 1, **characterised in that** the weakened line (1.1) is obtained by applying a single sonotrode (2.4).

3. Procedure for obtaining a weakened line for an airbag outlet in a textile lining, according to claim 2, **characterised in that** the weakened line (1.1) is obtained by applying a single sonotrode (2.4) that does not cover the entire length of the weakened line, requiring successive applications of the sonotrode (2.4) until completing the length of the weakened line (1,1).

4. Procedure for obtaining a weakened line for an airbag outlet in a textile lining, according to claim 1, **characterised in that** the weakened line (1.1) is obtained applying two or more sonotrodes (2.4).

5. Procedure for obtaining a weakened line for an airbag outlet in a textile lining, according to claim 1, **characterised in that** the sonotrode (2.4) has a contact surface (2.4.1) with a relief.

6. Procedure for obtaining a weakened line for an airbag outlet in a textile lining, according to claim 1, **characterised in that** the ultrasound generator (2.1) operates in a frequency range from 20 kHz to 50 kHz.

7. Procedure for obtaining a weakened line for an airbag outlet in a textile lining, according to the above claims, **characterised in that** it forms a narrowing in the textile lining along the line in which the sonotrode (2.4) is applied and has a relief matching that of the contact surface (2.4.1) of the sonotrode (2.4).

## Patentansprüche

1. Verfahren zum Erhalt einer abgeschwächten Linie für einen Airbagausgang in einer Textilverkleidung, **dadurch gekennzeichnet, dass** dieses eine Ultraschalleinheit (2) umfasst, bestehend aus:
- einem Ultraschall-Generator (2.1)
- einem Umwandler (2.2), der das elektrische Signal des Generators in eine schwingungsfähige Bewegung umwandelt
- einen Amplitudenwandler (2.3) für die mechanische Vibration
- eine Sonotrode (2.4)
bei dem während eines ersten Schrittes das Teil (1) mit der Textilverkleidung (1.5) an einer Trägermulde (3) befestigt wird, um dieses an seinem Platz zu halten, gefolgt von einer Annäherung und anschließenden Aufbringung von Druck auf der Textilverkleidung (1.5) mit der Sonotrode (2.4), zu welcher Zeit die Vibration für eine kurze Zeit, in dem Bereich von einer Sekunde, produziert wird; nach der Aufbringung der Sonotrode (2.4) wird diese abgenommen und die Befestigung an der Mulde (3) wird entfernt, wobei das in der Textiloberfläche (1.5) definierte Teil (1) mit der abgeschwächten Linie (1.1) freigegeben wird.

2. Verfahren zum Erhalt einer abgeschwächten Linie für einen Airbagausgang in einer Textilverkleidung nach Anspruch 1, **dadurch gekennzeichnet, dass** man die abgeschwächte Linie (1.1) erhält, indem eine einzige Sonotrode (2.4) aufgebracht wird.

3. Verfahren zum Erhalt einer abgeschwächten Linie für einen Airbagausgang in einer Textilverkleidung nach Anspruch 2, **dadurch gekennzeichnet, dass** man die abgeschwächte Linie (1.1) erhält, indem eine einzige Sonotrode (2.4) aufgebracht wird, die nicht die gesamte Länge der abgeschwächten Linie abdeckt, wodurch sukzessive Aufbringungen der Sonotrode (2.4) erforderlich sind, bis die Länge der abgeschwächten Linie (1.1) vervollständigt wird.

4. Verfahren zum Erhalt einer abgeschwächten Linie für einen Airbagausgang in einer Textilverkleidung nach Anspruch 1, **dadurch gekennzeichnet, dass** man die abgeschwächte Linie (1.1) erhält, indem zwei oder mehrere Sonotroden (2.4) aufgebracht werden.

5. Verfahren zum Erhalt einer abgeschwächten Linie für einen Airbagausgang in einer Textilverkleidung nach Anspruch 1, **dadurch gekennzeichnet, dass** die Sonotrode (2.4) eine Kontaktfläche (2.4.1) mit einem Relief besitzt.

6. Verfahren zum Erhalt einer abgeschwächten Linie für einen Airbagausgang in einer Textilverkleidung nach Anspruch 1, **dadurch gekennzeichnet, dass** der Ultraschallgenerator (2.1) bei einem Frequenzbereich von 20 kHz bis 50 kHz betrieben wird.

7. Verfahren zum Erhalt einer abgeschwächten Linie für einen Airbagausgang in einer Textilverkleidung nach den obigen Ansprüchen, **dadurch gekennzeichnet, dass** diese eine Verengung in der Textilverkleidung entlang der Linie bildet, auf der die Sonotrode (2.4) aufgebracht wurde, und ein Relief besitzt, das mit dem der Kontaktfläche (2.4.1) der Sonotrode (2.4) übereinstimmt.

## Revendications

1. Procédé pour obtenir une ligne de faible résistance pour une sortie de coussin gonflable dans une garniture textile, **caractérisé en ce qu'**il comprend une unité ultrasonique (2) constituée de :
- un générateur d'ultrasons (2.1)
- un convertisseur (2.2) qui transforme le signal électrique du générateur en un mouvement vibratoire
- un modifieur d'amplitude (2.3) pour la vibration mécanique
- une sonotrode (2.4)
dans lequel au cours d'une première étape la partie (1) avec la garniture textile (1.5) est fixée à un berceau de support (3) pour être maintenue en place, après quoi on évalue puis on applique une pression avec la sonotrode (2.4) sur la garniture textile (1.5), à ce moment-là, la vibration se produit pendant une courte durée, de l'ordre d'une seconde ; après avoir appliqué la sonotrode (2.4) on la retire et la fixation au berceau (3) est éliminée, ce qui libère la partie (1) avec la ligne de faible résistance (1.1) définie à la surface du textile (1.5).

2. Procédé pour obtenir une ligne de faible résistance pour une sortie de coussin gonflable dans une garniture textile, selon la revendication 1, **caractérisé en ce que** la ligne de faible résistance (1.1) est obtenue par l'application d'une unique sonotrode (2.4).

3. Procédé pour obtenir une ligne de faible résistance pour une sortie de coussin gonflable dans une garniture textile, selon la revendication 2, **caractérisé en ce que** la ligne de faible résistance (1.1) est obtenue par l'application d'une unique sonotrode (2.4) qui ne couvre pas toute la longueur de la ligne de faible résistance, ce qui nécessite des applications successives de la sonotrode (2.4) jusqu'à ce qu'elle couvre complètement la longueur de la ligne de faible résistance (1.1).

4. Procédé pour obtenir une ligne de faible résistance pour une sortie de coussin gonflable dans une garniture textile, selon la revendication 1, **caractérisé en ce que** la ligne de faible résistance (1.1) est obtenue par l'application de deux ou plusieurs sonotrodes (2.4).

5. Procédé pour obtenir une ligne de faible résistance pour une sortie de coussin gonflable dans une garniture textile, selon la revendication 1, **caractérisé en ce que** la sonotrode (2.4) possède une surface de contact (2.4.1) avec un relief.

6. Procédé pour obtenir une ligne de faible résistance pour une sortie de coussin gonflable dans une garniture textile, selon la revendication 1, **caractérisé en ce que** le générateur d'ultrasons (2.1) opère dans une gamme de fréquences allant de 20 kHz à 50 kHz.

7. Procédé pour obtenir une ligne de faible résistance pour une sortie de coussin gonflable dans une garniture textile, selon les revendications ci-dessus, **caractérisé en ce qu'**il forme un rétrécissement dans la garniture textile le long de la ligne sur laquelle la sonotrode (2.4) est appliquée et possède un relief correspondant à celui de la surface de contact (2.4.1) de la sonotrode (2.4).
